# EUROPEAN PATENT APPLICATION

(11) **EP 4 768 439 A1**
(43) Date of publication of application: **01.07.2026**
(21) Application number: 24856311.6
(22) Date of filing: 08.08.2024
(51) Int. Cl.: C01G 33/00

(54) **NIOBATE PARTICLES, METHOD FOR PRODUCING SAME, RESIN COMPOSITION, AND MOLDED BODY**

(30) Priority: 24.08.2023 JP 2023136187
(71) Applicant: DIC Corporation, Tokyo 174-8520 (JP)
(72) Inventor: KIYOOKA, Ryuichi, Sakura-shi, Chiba 285-8668 (JP); ARAKAWA, Takami, Sakura-shi, Chiba 285-8668 (JP); MAEKAWA, Fumihiko, Sakura-shi, Chiba 285-8668 (JP); YAMAMOTO, Hiroshi, Sakura-shi, Chiba 285-8668 (JP); YOSHIWARA, Masamichi, Sakura-shi, Chiba 285-8668 (JP); TAKAYAMA, Kyohei, Ichihara-shi, Chiba 290-8585 (JP); YUAN, Jianjun, Sakura-shi, Chiba 285-8668 (JP)
(74) Representative: Schön, Christoph
(86) International application number: PCT/JP2024/028354
(87) International publication number: WO 2025/041620

(57) **Abstract**

Provided is a method for producing niobate particles having excellent productivity. The production method provides niobate particles having high crystallinity. The niobate particles include a crystal structure of niobate represented by KₓNa₍₁₋ₓ₎NbO₃ (wherein 0 ≤ x ≤ 1), and the crystal structure has an average crystallite size of 80 nm or more, determined from a peak at 2θ = 23.0 ± 1.0°, of the niobate obtained from an X-ray diffraction measurement. The crystal structure preferably includes a perovskite crystal structure.

## Description

### Technical Field

The present invention relates to niobate particles, a method for producing niobate particles, a resin composition, and a molded body.

### Background Art

Alkali metal niobates are widely used as piezoelectric bodies, fillers, catalysts, water purification materials, and the like.

Among those, alkali metal niobates, represented by KₓNa₁₋ₓNbO₃ (0 ≤ x ≤ 1), have been applied as piezoelectric ceramics because their crystal structures are a perovskite structure, and furthermore, the alkali metal niobates are mixed with resins, and a development for their use as piezoelectric composites is carried out.

By the way, in order to increase the versatility of applications of alkali metal niobates, it is a very important technology to control the crystal growth of the alkali metal niobates. For example, as piezoelectric materials, the larger the crystallite size, the better the piezoelectric effect is expected to be exhibited.

PLT 1 discloses, as a filler for piezoelectric materials having excellent piezoelectric properties, alkali niobate compound particles in which the ratio of the number of moles of potassium to the total number of moles of sodium and potassium (K/(Na + K)) in terms of atoms is 0.460 to 0.495, and the ratio of the total number of moles of alkali metal elements to the number of moles of niobium in terms of atoms ((Li + Na + K)/Nb) is 0.995 to 1.005. The particles are obtained by repeating the steps of dry mixing and firing twice so that the ratio of the number of moles of alkali metal elements to Nb falls in a specific range, that is, by a production method with multi-stage firing.

NPL 1 discloses a new two-stage firing process that can synthesize lead-free (K_{0.50}Na_{0.50})_{0.94}Li_{0.06}NbO₃ particles having a high piezoelectric coefficient.

### Citation List

### Patent Literature

PTL 1: Japanese Unexamined Patent Application Publication No. 2018-198299

### Non Patent Literature

NPL 1: Nijesh K. James, et al., J. Am. Ceram. Soc., 99[12], 3957-3963.

### Summary of Invention

### Technical Problem

Conventional methods for producing niobate particles require multi-stage mixing and firing steps, and there is still room for further study in terms of productivity.

The present invention has been made to solve the above problems, and an object thereof is to provide a method for producing niobate particles having excellent productivity. Another object is to provide niobate particles having high crystallinity by the production method.

### Solution to Problem

The present invention includes the following aspects.

(1) Niobate particles including a crystal structure of niobate represented by KₓNa₍₁₋ₓ₎NbO₃ (wherein 0 ≤ x ≤ 1), in which
   the crystal structure has an average crystallite size of 80 nm or more, determined from a peak at 2θ = 23.0 ± 1.0°, of the niobate obtained from an X-ray diffraction measurement.
(2) The niobate particles according to item (1), in which the crystal structure includes a perovskite crystal structure.
(3) The niobate particles according to item (1) or (2), having a cubic shape.
(4) The niobate particles according to any one of items (1) to (3), in which the crystal structure has an average crystallite size of 50 nm or more, determined from a peak at 2θ = 32.0 ± 1.2°, of the niobate obtained from an X-ray diffraction measurement.
(5) The niobate particles according to any one of items (1) to (4), in which a median diameter D₅₀ calculated by a laser diffraction and scattering method is 0.1 to 100 µm.
(6) The niobate particles according to any one of items (1) to (5), in which, as a total content of niobium in the niobate particles, a content rate is 50 to 99% by mass in terms of Nb₂O₅ to 100% by mass of a total mass of the niobate particles, determined by an XRF analysis of the niobate particles.
(7) The niobate particles according to any one of items (1) to (6), in which, as a content of potassium and/or sodium in the niobate particles, a content rate is 0.5 to 40% by mass in terms of K₂O and Na₂O to 100% by mass of a total mass of the niobate particles, determined by an XRF analysis of the niobate particles.
(8) The niobate particles according to any one of items (1) to (7), containing molybdenum.
(9) The niobate particles according to item (8), in which, as a content of molybdenum in the niobate particles, a content rate is 0.01 to 20% by mass in terms of MoO₃ to 100% by mass of a total mass of the niobate particles, determined by an XRF analysis of the niobate particles.
(10) A method for producing the niobate particles according to any one of items (1) to (9), the method including firing a niobium compound in the presence of a molybdenum compound and a potassium compound and/or a sodium compound.
(11) The method for producing the molybdate particles according to above (10), in which the molybdenum compound is at least one compound selected from the group consisting of molybdenum trioxide, potassium molybdate, and sodium molybdate.
(12) The method for producing the niobate particles according to item (10) or (11), the method including:
   a step of mixing a niobium compound, a molybdenum compound, a potassium compound and/or a sodium compound to form a mixture; and
   a step of firing the mixture, in which
   a ratio (Nb₁)/(Na₁ + K₁ + Mo₁) of a total mass of the sodium compound (Na₁), the potassium compound (K₁), and the molybdenum compound (Mo₁), which are flux components, to a mass of the niobium compound (Nb₁) in the mixture is 0.6 or more.
(13) The method for producing the niobate particles according to any one of items (10) to (12), the method including:
   a step of mixing a niobium compound, a molybdenum compound, a potassium compound and/or a sodium compound to form a mixture; and
   a step of firing the mixture, in which
   a molar ratio of potassium atoms and sodium atoms to molybdenum atoms and niobium atoms in the mixture satisfies (K + Na)/(2 × Mo + Nb) > 1.
(14) A resin composition, containing the niobate particles according to any one of items (1) to (9) and a resin.
(15) A molded body made by molding the resin composition according to item (14).

### Advantageous Effects of Invention

The present invention provides a method for producing niobate particles having excellent productivity. The present invention also provides niobate particles having high crystallinity and excellent piezoelectric performance, as well as a resin composition containing the niobate particles and a molded body thereof.

### Brief Description of Drawings

FIG. 1 is an SEM image of KₓNa₍₁₋ₓ₎NbO₃ particles in Example 1.
FIG. 2 is an SEM image of KₓNa₍₁₋ₓ₎NbO₃ particles in Comparative Example 1.
FIG. 3 is an X-ray diffraction (XRD) pattern of KₓNa₍₁₋ₓ₎NbO₃ particles in Example 1.

### Description of Embodiments

Hereinafter, embodiments of niobate particles, a method for producing niobate particles, a resin composition, and a molded body in the present invention will be described.

### <Niobate particles>

Niobate particles include a crystal structure of niobate represented by KₓNa₍₁₋ₓ₎NbO₃ (wherein 0 ≤ x ≤ 1), in which the crystal structure has an average crystallite size of 80 nm or more, determined from a peak at 2θ = 23.0 ± 1.0°, of the niobate obtained from an X-ray diffraction measurement.

The niobate particles of the embodiment contain a niobate compound represented by KₓNa₍₁₋ₓ₎NbO₃. In the above formula KₓNa₍₁₋ₓ₎NbO₃, x is 0 ≤ x ≤ 1.

When x is 0 < x < 1, KₓNa₍₁₋ₓ₎NbO₃ is potassium sodium niobate (KₓNa₍₁₋ₓ₎NbO₃).

When x is 0, KₓNa₍₁₋ₓ₎NbO₃ is sodium niobate (NaNbO₃).

When x is 1, KₓNa₍₁₋ₓ₎NbO₃ is potassium niobate (KNbO₃).

Piezoelectric materials are known to be preferable in terms of their properties when they contain a composition called the morphotropic phase boundary (MPB), which is the boundary between different crystal systems (such as monoclinic crystal system and orthorhombic crystal system, and orthorhombic crystal system and tetragonal crystal system). The value of x above can be adjusted so that the composition is near this phase boundary. In KₓNa₍₁₋ₓ₎NbO₃, for example, x is preferably 0.4 ≤ x ≤ 0.6 and more preferably 0.45 ≤ x ≤ 0.55.

Note that, in order to improve properties such as durability other than piezoelectric performance, the piezoelectric materials may include a composition that deviates from the MPB composition, not the MPB composition itself. Therefore, the composition of the niobate particles of the embodiment is not limited to this preferred range, but is effective in the entire range of 0 ≤ x ≤ 1.

Also, for the purpose of suppressing leakage current and maintaining insulation properties, elements with lower valence than Nb, for example, such as Mn, Cr, Co, Ni, and Zn, may be appropriately included in a range within a few moles (1 to 3 moles) %, relative to Nb. The raw material may also contain elements such as Fe, for example, as unavoidable impurities.

In the present specification, the particles containing KₓNa₍₁₋ₓ₎NbO₃ may be sometimes referred to simply as "niobate particles", even the numeral value of x described above is in any of the above cases. The description of the numerical range of x described above is also sometimes omitted.

The type, composition, and crystal structure of the niobate contained in the niobate particles of the embodiment can be identified by an XRD pattern of a spectrum obtained by an XRD analysis.

The average crystallite size of the crystal structure included in the niobate particles of the embodiment can be identified by the following measurement method.

### [Measurement of crystallite size]

Measurements are performed by using an X-ray diffraction apparatus (for example, SmartLab, manufactured by Rigaku Holdings Corporation) and analysis software. The measurement method is the 2θ/θ method, and the average crystallite size is calculated using the Scherrer's equation from the full width at half maximum of the target peak (the peak having a peak top in a 2θ range of the target).

The average crystallite size, determined from the peak at 2θ = 23.0 ± 1.0°, of the crystal structure included in the niobate particles of the embodiment is 80 nm or more, preferably 90 nm or more, and more preferably 100 nm or more.

When the average crystallite size of the niobate particles is the lower limit value or more, excellent piezoelectric performance is exhibited when the niobate particles are made into a molded body as described below.

The upper limit value of the average crystallite size, determined from the peak at 2θ = 23.0 ± 1.0°, of the crystal structure included in the niobate particles of the embodiment is not particularly limited, but may be 1,000 nm or less, 800 nm or less, or 500 nm or less.

KₓNa₍₁₋ₓ₎NbO₃ can exhibit different crystal systems such as monoclinic crystal system, orthorhombic crystal system, and tetragonal crystal system, depending on their compositions, and the assignment of the crystal planes differs depending on the crystal system.

Unless otherwise noted in the present specification, the notation of the plane indices is based on the assumption that the crystal structure is a cubic crystal system.

For the target peak obtained from the measurement of the crystallite size, in a case of being assigned assuming a cubic crystal system without considering peak splitting, the peak at 2θ = 23.0 ± 1.0° is positioned to correspond to the (100) plane of the cubic crystal system. When the peaks are split, the crystallite size is defined by the peak having the strongest intensity.

The average crystallite size, determined from the peak at 2θ = 32.0 ± 1.2°, of the crystal structure included in the niobate particles of the embodiment is preferably 50 nm or more, more preferably 80 nm or more, and even more preferably 100 nm or more.

When the average crystallite size of the niobate particles is the lower limit value or more, even more excellent piezoelectric performance is exhibited.

The upper limit value of the average crystallite size, determined from the peak at 2θ = 32.0 ± 1.2°, of the crystal structure included in the niobate particles of the embodiment is not particularly limited, but may be 1,000 nm or less, 800 nm or less, or 700 nm or less.

One example of the numerical range of the average crystallite size, determined from the peak at 2θ = 32.0 ± 1.2°, of the crystal structure included in the niobate particles of the embodiment may be 50 nm or more and 1,000 nm or less, 80 nm or more and 800 nm or less, or 100 nm or more and 700 nm or less.

For the target peak obtained from the measurement of the crystallite size, in a case of being assigned assuming a cubic crystal system without considering peak splitting, the peak at 2θ = 32.0 ± 1.2° is positioned to correspond to the (110) plane of the cubic crystal system. When the peaks are split, the crystallite size is defined by the peak with the strongest intensity.

The average crystallite size, determined from the peak at 2θ = 57.0 ± 1.0°, of the crystal structure included in the niobate particles of the embodiment is preferably 55 nm or more, more preferably 60 nm or more, and even more preferably 65 nm or more.

When the average crystallite size of the niobate particles is the lower limit value or more, even more excellent piezoelectric performance is exhibited.

The upper limit value of the average crystallite size, determined from the peak at 2θ = 57.0 ± 1.0°, of the crystal structure included in the niobate particles of the embodiment is not particularly limited, but may be 500 nm or less, 400 nm or less, or 300 nm or less.

One example of the above numerical range of the average crystallite size, determined from the peak at 2θ = 57.0 ± 1.0°, of the crystal structure included in the niobate particles of the embodiment may be 55 nm or more and 500 nm or less, 60 nm or more and 400 nm or less, or 65 nm or more and 300 nm or less.

For the target peak obtained from the measurement of the crystallite size, in a case of being assigned assuming a cubic crystal system without considering peak splitting, the peak at 2θ = 57.0 ± 1.0° is positioned to correspond to the (211) plane of the cubic crystal system. When the peaks are split for the target peak, the crystallite size is defined by the peak with the strongest intensity.

The production method of the embodiment described below provides excellent control of the crystal growth of the niobate particles to be produced, and niobate particles with an improved average crystallite size can be easily obtained.

The average crystallite size can be controlled by the used amount and type of a fluxing agent and the firing conditions in the production method described below.

The crystal structure of the niobate particles of the embodiment may include a perovskite crystal structure.

The niobate particles of the embodiment may have a cubic shape.

In the present specification, the "cubic shape" may be a shape derived from a perovskite structure, and preferably has a shape of a hexahedron, which is substantially cubic, and each face forming a hexahedron may be a plane surface, or a curved or uneven surface.

According to the production method of the embodiment described below, it is possible to produce the niobate particles having a perovskite crystal structure and a cubic shape.

The higher the firing temperature, the niobate particles having a larger average crystallite size and having a larger particle size tend to be obtained.

When the niobate particles have a cubic shape, the particle size is preferably 0.1 µm or more, more preferably 0.5 µm or more, and even more preferably 1 µm or more.

When the niobate particles have a cubic shape, the upper limit value of the particle size is not particularly limited, but may be 100 µm or less, 80 µm or less, or 50 µm or less, as one example.

When the niobate particles have a cubic shape, the upper numerical range for the particle size may be 0.1 to 100 µm, 0.5 to 80 µm, or 1 to 50 µm, as one example.

In the present specification, the "particle size" of the niobate particles having a cubic shape is a length of one side of a hexahedron determined from the particle image of the primary particles of the niobate particles in a two-dimensional image taken by a scanning electron microscope (SEM).

The value of the size of the niobate particle having the cubic shape is an average value obtained from 50 or more niobate particles randomly selected among the above particles having an idiomorphic shape to be measured.

When the niobate particles having a cubic shape are included, it is preferable that 50% or more of the particles have a cubic shape, more preferable that 80% or more of the particles have a cubic shape, and even more preferable that 90% or more of the particles have a cubic shape, on a mass basis or a number basis.

The median diameter D₅₀ of the niobate particles of the embodiment, calculated by a laser diffraction and scattering method, may be 0.1 to 100 µm, 0.5 to 80 µm, or 1 to 50 µm.

The D₁₀ of the niobate particles of the embodiment, calculated by a laser diffraction and scattering method, may be 0.05 to 70 µm, 0.1 to 50 µm, or 0.5 to 20 µm.

The median diameter D₉₀ of the niobate particles of the embodiment, calculated by a laser diffraction and scattering method, may be 0.5 to 150 µm, 1 to 100 µm, or 3 to 70 µm.

The median diameter D₅₀ of a sample of the niobate particles, calculated by a laser diffraction and scattering method, can be determined as a particle size at which the cumulative volume percentage is 50% in the particle size distribution measured in a dry system using a laser diffraction particle size distribution analyzer. The D₁₀ of a sample of the niobate particles, calculated by a laser diffraction and scattering method, can be determined as a particle size at the point where the distribution curve of the cumulative volume percentage intersects the horizontal axis at 10% from the small particle side, and D₉₀ can be determined as a particle size at the point where the distribution curve of the cumulative volume percentage intersects the horizontal axis at 90% from the small particle side.

The specific surface area of the niobate particles of the embodiment, determined by a BET method, may be 0.02 to 20 m²/g, 0.04 to 10 m²/g, or 0.05 to 3 m²/g.

The specific surface area is measured using a specific surface area meter (for example, BELSORP MINI, manufactured by MicrotracBEL Corp.), and a surface area per gram of a sample measured from the amount of nitrogen gas adsorbed by the Brunauer-Emmett-Teller method (BET method) is calculated as a specific surface area (m²/g).

The niobate particles of the embodiment contains KₓNa₍₁₋ₓ₎NbO₃ (where 0 ≤ x ≤ 1).

The niobate particles of the embodiment preferably contain 65% by mass or more of KₓNa₍₁₋ₓ₎NbO₃ described above, preferably 65 to 99.999% by mass, more preferably 70 to 99.97% by mass, even more preferably 75 to 99.95% by mass, to 100% by mass of the niobate particles.

In general, the niobate particles obtained after firing are a mixture with fluxes (for example, potassium sodium molybdate, sodium oxide or potassium oxide, sodium carbonate or potassium carbonate), therefore, in order to increase their purity, washing is preferably performed. However, according to the production method described below, the niobate particles in the above range can be obtained without any special washing step.

As a content of niobium in the niobate particles, the total content rate may be 50% by mass or more, may be 50 to 99% by mass, may be 60 to 98% by mass, or may be 70 to 95% by mass, in terms of Nb₂O₅ and Ta₂O₅, to 100% by mass of a total mass of the niobate particles, determined by an XRF analysis of the niobate particles.

The content rate in terms of Nb₂O₅ refers to a value obtained from the amount of Nb₂O₅ obtained by converting the content of niobium, determined by an XRF analysis, using a calibration curve for Nb₂O₅ conversion.

The niobate particles of the embodiment contain potassium and/or sodium.

As a content of potassium and/or sodium in the niobate particles, the total content rate may be 0.5% by mass or more, may be 0.5 to 40% by mass, may be 1 to 30% by mass, or may be 3 to 25% by mass, in terms of K₂O and Na₂O to 100% by mass of a total mass of the niobate particles, determined by an XRF analysis of the niobate particles.

The total content rate in terms of K₂O and Na₂O refers to a value obtained from the sum of the amount of K₂O obtained by converting the content of potassium, determined by an XRF analysis, using a calibration curve for K₂O conversion and the amount of Na₂O obtained by converting the content of sodium, determined by an XRF analysis, using a calibration curve for Na₂O conversion. Note that, when the composition of the niobate particles is x = 0 or 1 in KₓNa₍₁₋ₓ₎NbO₃, the content of potassium or the content of sodium may be 0.

The niobate particles of the embodiment can further contain molybdenum.

The niobate particles of the embodiment can contain molybdenum derived from a molybdenum compound that may be used in the production method described below. The niobate particles of the embodiment can also achieve highly efficient crystal growth by using a molybdenum compound in the production method described below.

As for molybdenum contained in the niobate particles of the embodiment, its state of existence and amount are not particularly limited, and it may be included in the niobate particles as molybdenum oxide, a partially reduced molybdenum compound, or the like, in addition to molybdenum metal. Molybdenum is considered to be contained in the niobate particles as MoO₃, but may also be contained in the niobate particles as MoO₂, MoO, or the like in addition to MoO₃.

The form of containing molybdenum is not particularly limited, and molybdenum may be contained in the form in which molybdenum adheres to the surface of niobate particles, in the form in which molybdenum is substituted into a part of the crystal structure of niobate particles, in an amorphous state, or in combination thereof.

As a content of molybdenum when the niobate particles of the embodiment contain molybdenum, the content rate may be 0.01% by mass or more, may be 0.01 to 20% by mass, may be 0.05 to 15% by mass, or may be 0.06 to 10% by mass, in terms of MoO₃ to 100% by mass of a total mass of the niobate particles, determined by an XRF analysis of the niobate particles.

The content rate in terms of MoO₃ refers to a value obtained from the amount of MoO₃ obtained by converting the content of molybdenum, determined by an XRF analysis, using a calibration curve for MoO₃ conversion.

The above values for the content of molybdenum, the content of niobium, and the total content of potassium and sodium can be freely combined.

As one example of the niobate particles of the embodiment, the niobate particle in which the content rate of molybdenum in terms of MoO₃ is 0 to 20% by mass and the content rate of niobium in terms of Nb₂O₅ is 50 to 99% by mass, and the content rate of potassium and sodium in terms of K₂O and Na₂O is 0.5 to 40% by mass, to the total mass of 100% by mass of the niobate particles, determined by an XRF analysis of the niobate particles, can be exemplified.

As another example of the niobate particles of the embodiment, the niobate particle in which the content rate of molybdenum in terms of MoO₃ is 0.01 to 20% by mass and the content rate of niobium in terms of Nb₂O₅ is 50 to 99% by mass, and the content rate of potassium and sodium in terms of K₂O and Na₂O is 0.5 to 40% by mass, to the total mass of 100% by mass of the niobate particles, determined by an XRF analysis of the niobate particles, can be exemplified.

As another example of the niobate particles of the embodiment, the niobate particle in which the content rate of molybdenum in terms of MoO₃ is 0.05 to 15% by mass and the content rate of niobium in terms of Nb₂O₅ is 60 to 98% by mass, and the content rate of potassium and sodium in terms of K₂O and Na₂O is 1 to 30% by mass, to the total mass of 100% by mass of the niobate particles, determined by an XRF analysis of the niobate particles, can be exemplified.

As another example of the niobate particles of the embodiment, the niobate particle in which the content rate of molybdenum in terms of MoO₃ is 0.06 to 10% by mass and the content rate of niobium in terms of Nb₂O₅ is 70 to 95% by mass, and the content rate of potassium and sodium in terms of K₂O and Na₂O is 3 to 25% by mass, to the total mass of 100% by mass of the niobate particles, determined by an XRF analysis of the niobate particles, can be exemplified.

The niobate particles of the embodiment can be provided as an aggregate of niobate particles. For the values for the above crystallite size, particle size distribution, specific surface area, x numerical value, content of molybdenum, content of niobium, content of potassium, and content of sodium, the values obtained by using the aggregate as a sample can be adopted.

The niobate particles of the embodiment are produced by the production method described below. According to the production method described below, unlike conventional production methods, the desired niobate particles can be obtained in only a single-stage of firing and mixing step, resulting in high production efficiency, which is therefore preferable.

The niobate particles of the embodiment can be used as piezoelectric bodies, catalysts, water purification materials, and the like.

### <Method for producing niobate particles>

The method of producing the niobate particles of the embodiment includes firing a niobium compound in the presence of a molybdenum compound and a potassium compound and/or a sodium compound.

According to the method of producing the niobate particles of the embodiment, the niobate particles according to one embodiment of the present invention described above can be produced.

Also, according to the method of producing the niobate particles of the embodiment, the degree of the crystal growth of the niobate particles to be produced is excellent by firing the niobium compound in the presence of a molybdenum compound and a potassium compound and/or a sodium compound.

Furthermore, according to the method of producing the niobate particles of the embodiment, the degree of the crystal growth of the niobate particles to be produced is more excellent by firing the niobium compound in the presence of potassium carbonate and/or sodium carbonate.

A preferred method of producing the niobate particles may include a step of mixing a niobium compound, a molybdenum compound, a potassium compound and/or a sodium compound to form a mixture (mixing step) and a step of firing the mixture (firing step).

Here, a compound containing molybdenum and potassium, such as potassium molybdate, can be also used instead of at least some of the molybdenum compounds and the potassium compounds. Similarly, a compound containing molybdenum and sodium, such as sodium molybdate, can be also used instead of at least some of the molybdenum compounds and the sodium compounds.

Therefore, mixing a compound containing molybdenum and potassium and/or sodium is also regarded as mixing a molybdenum compound and a potassium compound and/or a sodium compound.

### [Mixing step]

The mixing step is a step of mixing a niobium compound, a molybdenum compound, a potassium compound and/or a sodium compound to form a mixture.

When the niobate particles to be produced contain potassium sodium niobate, the step can include a step of mixing a niobium compound and a molybdenum compound and, if desired, a potassium compound and a sodium compound to form a mixture (mixing step).

When the niobate particles to be produced contain potassium niobate, the step can include a step of mixing a niobium compound and a molybdenum compound and, if desired, a potassium compound to form a mixture (mixing step).

When the niobate particles to be produced contain sodium niobate, the step can include a step of mixing a niobium compound and a molybdenum compound and, if desired, a sodium compound to form a mixture (mixing step).

Hereinafter, the contents of the mixture will be described.

### (Niobium compound)

The niobium compound is not limited as long as it is a compound that can be fired together with the raw material compound to form niobate, and examples thereof include niobium oxide, niobium hydroxide, niobium sulfide, niobium nitride, niobium halides such as niobium fluoride, niobium chloride, niobium bromide, and niobium iodide, and niobium alkoxide, and niobium hydroxide and niobium oxide are preferred, and niobium oxide is more preferred.

Examples of niobium oxides include niobium pentoxide (Nb₂O₅), niobium dioxide (NbO₂), and niobium monoxide (NbO). In addition to niobium oxides having the above oxidation numbers, any other niobium oxide having different valences can be used.

The physical forms such as shape, particle size, specific surface area of these niobium compounds as precursors, are not particularly limited.

The shape of the niobium compound in the raw material hardly reflects on the shape after firing, so that the niobium compound may be suitably used, for example, in any form of spheres, amorphous, aspect-having structures (such as wires, fibers, ribbons, and tubes), or sheets.

### (Molybdenum Compound)

Examples of the molybdenum compounds include molybdenum oxide, molybdic acid, molybdenum sulfide, and molybdate compounds, and molybdenum oxide and molybdate compounds are preferred.

Examples of the molybdenum oxide include molybdenum dioxide (MoO₂) and molybdenum trioxide (MoO₃), and molybdenum trioxide is preferred.

The molybdate compound is preferably an alkali metal salt of a molybdenum oxoanion, more preferably lithium molybdate, potassium molybdate, or sodium molybdate, and even more preferably potassium molybdate or sodium molybdate.

In the method of producing the niobate particles of this embodiment, the molybdenum compound may also be a hydrate.

The molybdenum compound is preferably at least one compound selected from the group consisting of molybdenum trioxide, lithium molybdate, potassium molybdate, and sodium molybdate, and more preferably at least one compound selected from the group consisting of molybdenum trioxide, potassium molybdate, and sodium molybdate.

The compound containing molybdenum and potassium, which is suitable as a fluxing agent, can be produced in the process of firing using the molybdenum compound and the potassium compound as raw materials, which are cheaper and more readily available, for example. Here, both the case where the molybdenum compound and the potassium compound are used as a fluxing agent and the case where the compound containing molybdenum and potassium is used as a fluxing agent are considered as the case where the molybdenum compound and the potassium compound are used as a fluxing agent, that is, as being in the presence of the molybdenum compound and the potassium compound.

The compound containing molybdenum and sodium, which is suitable as a fluxing agent, can be produced in the process of firing using the molybdenum compound and the sodium compound as raw materials, which are cheaper and more readily available, for example. Here, both the case where the molybdenum compound and the sodium compound are used as a fluxing agent and the case where the compound containing molybdenum and sodium is used as a fluxing agent are considered as the case where the molybdenum compound and the sodium compound are used as a fluxing agent, that is, as being in the presence of the molybdenum compound and the sodium compound.

Note that, the molybdenum compound described above may be used alone or in combination of two or more thereof.

Furthermore, potassium molybdate (K₂MoₙO₃ₙ₊₁, n = 1 to 3) contains potassium, and thus can also function as a potassium compound described below.

Moreover, sodium molybdate (Na₂MoₙO₃ₙ₊₁, n = 1 to 3) also contains sodium, and thus can also function as a sodium compound described below.

### (Potassium compound)

The potassium compound is not particularly limited, but examples thereof include potassium chloride, potassium chlorite, potassium chlorate, potassium sulfate, potassium hydrogen sulfate, potassium sulfite, potassium hydrogen sulfite, potassium nitrate, potassium carbonate, potassium hydrogen carbonate, potassium acetate, potassium oxide, potassium bromide, potassium bromate, potassium hydroxide, potassium silicate, potassium phosphate, potassium hydrogen phosphate, potassium sulfide, potassium hydrogen sulfide, potassium molybdate, and potassium tungstate. In this case, the potassium compound includes isomers, similar to the case of the molybdenum compound. Among those, potassium carbonate, potassium hydrogen carbonate, potassium oxide, potassium hydroxide, potassium chloride, potassium sulfate, and potassium molybdate are preferably used, potassium carbonate, potassium hydrogen carbonate, potassium chloride, potassium sulfate, and potassium molybdate are more preferably used, and potassium carbonate and/or potassium molybdate are even more preferably used.

Note that, the potassium compound may be used alone or in combination of two or more thereof.

Furthermore, similarly to the above, potassium molybdate contains molybdenum, and thus can also function as a molybdenum compound described above.

### (Sodium Compound)

The sodium compound is not particularly limited, but examples thereof include sodium carbonate, sodium molybdate, sodium oxide, sodium hydrogen carbonate, sodium sulfate, sodium hydroxide, sodium nitrate, sodium chloride, and metallic sodium. Among these, sodium carbonate, sodium molybdate, sodium oxide, and sodium sulfate are preferably used and sodium carbonate and/or sodium molybdate are more preferably used from the viewpoint of easy industrial availability and handling.

Note that the sodium compound may be used alone or in combination of two or more thereof.

Furthermore, similarly to the above, sodium molybdate contains molybdenum, and thus can also function as a molybdenum compound described above.

Thus, although there may be overlapping notations as a molybdenum compound in the classification, as one example, the molybdenum compound is at least one compound selected from the group consisting of molybdenum trioxide, potassium molybdate, and sodium molybdate, and
the sodium compound is preferably sodium carbonate or sodium molybdate, and the potassium compound is potassium carbonate or potassium molybdate.

Preferably, the method of producing potassium sodium niobate particles including firing the niobium compound in the presence of the molybdenum compound, and the potassium compound and the sodium compound, can be exemplified.

Preferably, the method for producing sodium niobate particles including firing the niobium compound in the presence of the molybdenum compound and the sodium compound, can be exemplified.

Preferably, the method for producing potassium niobate particles including firing the niobium compound in the presence of the molybdenum compound and the potassium compound, can be exemplified.

In the method of producing the niobate particles of this embodiment, the potassium compound, the sodium compound, and the molybdenum compound are used as a fluxing agent.

When the potassium compound and/or the sodium compound are used as a fluxing agent, it is assumed that by such a firing process, oxides (Na₂O and K₂O) are formed from some of the potassium compounds and/or the sodium compounds, which function as a flux, and thus the crystal growth of niobate proceeds.

Furthermore, when the niobium compound is fired in the presence of potassium carbonate and/or sodium carbonate, it is assumed that oxides (Na₂O and K₂O) and/or CO₂ are formed from some of potassium carbonates and/or sodium carbonates, and these oxides and/or CO₂ function as a flux, and thus crystal growth of niobates proceeds.

It is considered that through the reaction by such a firing process, the niobate particles (KₓNa₍₁₋ₓ₎NbO₃) are formed along with the formation of oxides (Na₂O and K₂O) and/or CO₂, which function as a flux. It is considered that the oxides (Na₂O and K₂O) and/or CO₂ function as a flux and therefore, the formation of niobate particles (KₓNa₍₁₋ₓ₎NbO₃) having a large crystallite size is promoted.

The molybdate compound used as the flux above does not vaporize even in the firing temperature range and can be easily recovered by washing after firing, thus reducing the amount of the molybdenum compound released outside the firing furnace and significantly reducing the production costs.

In the method of producing the niobate particles of this embodiment, the total used amount of the molybdenum compound, the potassium compound, and the sodium compound that are the raw materials (hereinafter also referred to as a fluxing agent), which are considered to function as a fluxing agent, and the used amount of the niobium compound are not particularly limited, but preferably, a mixture in which the ratio of total mass (Nb₁)/(Na₁ + K₁ + Mo₁) of the sodium compound (Na₁), the potassium compound (K₁), and the molybdenum compound (Mo₁), which are flux components, is 0.6 or more to the mass of the niobium compound (Nb₁), can be prepared, and the mixture can be fired. More preferably, a mixture in which the ratio of the total mass (Nb₁)/(Na₁ + K₁ + Mo₁) is 0.64 or more, can be prepared, and the mixture can be fired. Even more preferably, a mixture in which the ratio of the total mass (Nb₁)/(Na₁ + K₁ + Mo₁) is 0.67 or more, can be prepared, and the mixture can be fired.

From the viewpoint of efficient crystal growth, the used amount of the fluxing agent for the niobium compound that is a raw material, is preferably the above mass ratio or more. By reducing the used amount of the fluxing agent for the niobium compound that is the raw material, the takeout properties of the fired product from the firing vessel are improved, although the detailed reason is not clear, which is thus preferable. Furthermore, the K/Na ratio of the niobate particles can be prepared within a desired range, which is thus preferable.

From the same viewpoint, in the method for producing the niobate particles of the embodiment, the molar ratio of potassium atoms and sodium atoms to molybdenum atoms and niobium atoms (K + Na)/(2 × Mo + Nb) in the mixture is preferably above 1.0, is more preferably 1.01 to 1.20, even more preferably 1.02 to 1.15, and particularly preferably 1.02 to 1.10.

When the molar ratio (K + Na)/(2 × Mo + Nb) is within the range, niobate particles with an improved crystallite size are easily obtained, which is thus preferable. Note that, when the molar ratio (K + Na)/(2 × Mo + Nb) is 1.25 or less, the crystal growth can be promoted and the amount of irregularly shaped particles can be suppressed in the resulting niobate particles, which is thus particularly preferable.

In the method of producing the niobate particles of the embodiment, the molar ratio of potassium atoms and or sodium atoms to molybdenum atoms in the mixture is preferably (K + Na)/Mo = 1 to 4, and more preferably 1.5 to 4. In particular, in the case of (K + Na)/Mo = 2 to 4, a single composition of KₓNa₍₁₋ₓ₎Nb_{y}O_{z} can be easily formed in the niobate particles to be produced.

According to the production method of the present invention, the niobate particles can be obtained with a high yield while controlling the composition ratio of the niobate particles represented by KₓNa₍₁₋ₓ₎NbO₃ by only a single-stage of firing, compared to the conventional production method, and furthermore, it is possible to control the particle size and the crystallite size of the particles.

### [Firing step]

The firing step is a step of firing the mixture. The niobate particles according to the embodiment are obtained by firing the mixture. As mentioned above, this production method is called the flux method.

The firing method is not particularly limited and can be performed by any known and customary method. It is thought that, in a case of using the molybdenum compound, when the firing temperature exceeds 500°C, some of the niobium compounds react with the molybdenum compound to form niobium molybdate and the like, and the molybdate (KₐMo_{b}O_{c}, NaₐMo_{b}O_{c}, and KₐNa_{a'}Mo_{b}O_{c}) is formed from the molybdenum compound. Furthermore, it is considered that when the firing temperature reaches 800°C or higher, the partially formed niobium molybdate and the like decompose and niobate particles, due to the fluxing function of the molybdate, are formed. It is considered that, in the niobate particles, the molybdenum compound is incorporated into the niobate particles during the process of the decomposition of the niobium molybdate and particle crystal growth.

The state of the niobium compound, the molybdenum compound, the sodium compound, the potassium compound, and other compounds that can be used when firing is not particularly limited, and it is sufficient as long as the raw material compounds such as the molybdenum compound, the niobium compound, the sodium compound, and the potassium compound are present in the same space where they can interact with each other. Specifically, the mixing of the raw material compound powder may be a simple mixing, mechanical mixing using a grinder or the like, or mixing using a mortar or the like, and mixing may be carried out in a dry state or a wet state.

The firing temperature conditions are not particularly limited, and are determined as appropriate, considering the particle size of the target niobate particles, the formation of the molybdenum compound in the niobate particles, the shape of the niobate particles, and other factors. The firing temperature may be 700°C or higher, 750°C or higher, 800°C or higher, 850°C or higher, or 900°C or higher, which is close to the temperature at which the molybdate can function as a flux.

From the viewpoint of efficiently producing the niobate particles with an improved crystallite size, the firing temperature is preferably 800°C or higher, more preferably 900°C or higher, and even more preferably 1,000°C or higher.

In general, in order to control the shape of the niobate obtained after firing, it is necessary to perform high-temperature firing at temperatures exceeding 1,500°C, close to the melting point of the niobium oxide, but this is a major challenge for industrial use in terms of the burden on the firing furnace and fuel costs.

According to one embodiment of the present invention, for example, the formation of the niobate particles can be efficiently performed at low cost, even under conditions where the maximum firing temperature for firing the niobium compound is 1,500°C or lower.

Also, according to the method for producing the niobate particles of the embodiment, the niobate particles having an idiomorphic shape can be formed regardless of the shape of the precursor, even when the firing temperature is 1,300°C or lower, which is much lower than the melting point of niobium oxide. Furthermore, from the viewpoint of efficient production of the niobate particles, the firing temperature is preferably 1,200°C or lower, and more preferably 1,100°C or lower.

The numerical range of firing temperature for firing the niobium compound in the firing step may be 700 to 1,300°C, 750 to 1,300°C, 800 to 1,200°C, 850 to 1,200°C, 900 to 1,100°C, 1,000 to 1,100°C, as one example. The desired particles can be easily obtained by combining a specific charge-in quantity of a flux and firing temperature.

From the viewpoint of production efficiency, the temperature rising rate may be 20 to 600°C/hour, 40 to 500°C/hour, or 80 to 400°C/hour.

As to the time of firing, it is preferable that the temperature rising time to a predetermined firing temperature is in a range of 15 minutes to 10 hours and the holding time at the firing temperature is in a range of 5 minutes to 30 hours. For efficient formation of the niobate particles, the holding time of firing temperature is preferably 2 hours or longer, and the holding time of firing temperature is more preferably 2 to 15 hours.

The niobate particles having an improved crystallite size can be easily obtained by selecting the condition of the firing temperature of 700 to 1,100°C and the holding time of firing temperature of 2 to 15 hours.

The firing atmosphere is not particularly limited as long as the effects of the present invention are obtained, but for example, an oxygen-containing atmosphere such as air or oxygen, and an inert atmosphere such as nitrogen, argon, or carbon dioxide are preferable, and an air atmosphere is more preferable considering the cost.

The apparatus for firing is not necessarily limited, and what is called a firing furnace may be used. The firing furnace is preferably made of a material that does not react with molybdenum oxide that has sublimated, and furthermore, and a highly sealed firing furnace is preferably used so that molybdenum oxide is more efficiently utilized.

### [Cooling step]

The method of producing the niobate particles may include a cooling step. The cooling step is a step for cooling the niobate particles that have grown crystals during the firing step.

The cooling rate is not particularly limited, and is preferably 1 to 1,000°C/hour, more preferably 5 to 500°C/hour, and even more preferably 50 to 100°C/hour. When the cooling rate is 1°C/hour or more, the production time can be reduced, which is thus preferable. On the other hand, when the cooling rate is 1,000°C/hour or less, the firing vessel is less likely to crack due to thermal shock, allowing it to be used for a longer period, which is thus preferable.

The cooling method is not particularly limited, and the cooling method may be natural cooling or a cooling apparatus may be used.

### [Post-treatment step]

The production method of this embodiment may include a post-treatment step. The post-treatment step may be a step to separate the niobate particles from the fluxing agent, which are contained in the fired product, and can be performed by taking out the fired product from the firing vessel. The post-treatment step may be performed after the firing step described above. Also, the post-treatment step may be repeated two or more times, as needed.

Examples of the methods for removing the fluxing agent include washing and high-temperature treatment. These may be performed in combination.

The washing method is not particularly limited, but examples thereof include washing with water when the flux is water-soluble, as in the case of the potassium compound, the sodium compound, and the molybdate compound described above.

Furthermore, examples of the methods of high-temperature treatment include a method of raising the temperature equal to or higher than the sublimation point or the boiling point of the fluxing agent.

### [Pulverization step]

The fired product obtained through the firing step may not meet a range of the suitable particle size for the applications under consideration due to agglomeration of the niobate particles. Therefore, the niobate particles may be pulverized to meet the range of the suitable particle size, as needed.

The pulverization method of the fired product is not particularly limited, and conventionally known pulverization methods such as ball mills, jaw crushers, jet mills, disk mills, spectro mills, grinders, and mixer mills, can be applied.

### [Classification step]

The fired product containing the niobate particles obtained by the firing step may be subjected to a classification treatment as appropriate in order to adjust the range of the particle size. The "classification treatment" refers to an operation of grouping the particles according to the size of the particles.

The classification may be either a wet type or a dry type, and from the viewpoint of its productivity, a dry type classification is preferred.
The dry type classification includes the classification using a sieve, as well as air classification, which classifies based on the difference between centrifugal force and fluid drag, and from the viewpoint of classification accuracy, air classification is preferred, and the dry type classification can be performed using classifiers such as airflow classifiers utilizing the Coanda effect, swirling airflow type classifiers, forced vortex type centrifugal classifiers, and semi-free vortex type centrifugal classifiers.

The pulverization step and the classification step described above can be performed at necessary stages. The average particle size of the resulting niobate particles, for example, can be adjusted by the presence or absence of these pulverization and classification and the selection of these conditions.

Note that, in the production method, by combining the ratio (Nb₁)/(Na₁ + K₁ + Mo₁) of the total mass of the sodium compound (Na₁), the potassium compound (K₁), and the molybdenum compound (Mo₁), which are the flux components, to the mass of the niobium compound (Nb₁) and the firing temperature within a specific range, the niobate particles having the desired average particle size and particle size distribution can be obtained without performing the pulverization step and the classification step.

For the niobate particles of the embodiment or the niobate particles obtained by the production method of the embodiment, those which are less agglomerated or non-agglomerated are preferable, from the view point of easily exhibiting their inherent properties and being more excellent in handling themselves, and being more excellent in dispersibility in the case of being used by dispersing them in a dispersion medium.

Note that, according to the method for producing the niobate particles of the embodiment, the niobate particles which are less agglomerated or non-agglomerated can be easily produced, so it has the excellent advantage that the niobate particles having the desired excellent properties can be produced with high productivity even without performing the pulverization step and the classification step described above.

### <<Resin composition>>

The niobate particles of the embodiment can be blended together with a resin to provide a resin composition. As one embodiment, a resin composition containing the niobate particles of the embodiment and a resin is provided.

The resins are not particularly limited, and may be polymers, oligomers, or monomers, may be thermosetting resins or thermoplastic resins, and may be active energy ray curable resins.

### (Thermosetting resin)

The thermosetting resin is a resin having the property of being capable of changing to be substantially insoluble and infusible when cured by means of heating, radiation, catalysts, or the like. For example, the thermosetting resins may be known and customary resins used for molding materials or the like. Specific examples thereof include novolac type phenolic resins such as phenol novolac resins and cresol novolac resins; phenolic resins such as resol type phenolic resins such as unmodified resol phenolic resins and oil-modified resol phenolic resins modified with paulownia oil, linseed oil, walnut oil, or the like; bisphenol type epoxy resins such as bisphenol A epoxy resins and bisphenol F epoxy resins; novolac type epoxy resins such as fatty chain-modified bisphenol type epoxy resins, novolac epoxy resins, and cresol novolac epoxy resins; epoxy resins such as biphenyl type epoxy resins and polyalkylene glycol type epoxy resins; urea resins; resins having a triazine ring such as melamine resins; vinyl resins such as (meth)acrylic resins and vinyl ester resins: unsaturated polyester resins, bismaleimide resins, polyurethane resins, diallyl phthalate resins, silicone resins, resins having a benzoxazine ring, and cyanate ester resins, and the resins may be polymers, oligomers, or monomers.

The thermosetting resin described above may also be used together with a curing agent. The curing agent used in this process can be used in known and customary combination with the thermosetting resin. For example, in a case where the thermosetting resin is an epoxy resin, any compounds in common use as a curing agent can be used, and examples thereof include amine-based compounds, amide-based compounds, acid anhydride-based compounds, and phenolic-based compounds can be used. Specific examples of the amine-based compounds include diaminodiphenylmethane, diethylenetriamine, triethylenetetramine, diaminodiphenyl sulfone, isophoronediamine, imidazole, BF₃-amine complexes, and guanidine derivatives. Examples of the amide-based compounds include dicyandiamide and polyamide resins synthesized from a dimer of linolenic acid and ethylenediamine. Examples of the acid anhydride-based compounds include phthalic anhydride, trimellitic anhydride, pyromellitic anhydride, maleic anhydride, tetrahydrophthalic anhydride, methyltetrahydrophthalic anhydride, methylnadic anhydride, hexahydrophthalic anhydride, and methylhexahydrophthalic anhydride. Examples of the phenolic-based compounds include phenol novolac resins, cresol novolac resins, aromatic hydrocarbon formaldehyde resin-modified phenolic resins, dicyclopentadiene phenol-addition type resins, phenol aralkyl resins (xylok resin), polyvalent phenol novolac resins which are represented by resorcinol novolac resins and synthesized from a polyvalent hydroxy compound and formaldehyde, naphthol aralkyl resins, trimethylolmethane resins, tetraphenylolethane resins, naphthol novolac resins, naphthol-phenol co-condensed novolac resins, naphthol-cresol co-condensed novolac resins, and polyvalent phenol compounds such as biphenyl-modified phenolic resins (polyvalent phenolic compounds with phenolic nuclei linked by bismethylene groups), biphenyl-modified naphthol resins (polyvalent naphthol compounds with phenolic nuclei linked by bismethylene groups), aminotriazine-modified phenolic resins (polyvalent phenolic compounds with phenolic nuclei linked by melamine, benzoguanamine, or the like), and alkoxy group-containing aromatic ring-modified novolac resins (polyvalent phenolic compounds with phenolic nuclei and alkoxy group-containing aromatic rings linked by formaldehyde). These curing agents may be used alone or in combination of two or more thereof.

The blended amount of the thermosetting resin and the curing agent in the resin composition of the embodiment is not particularly limited, and for example, in a case where the curing resin is an epoxy resin, because of excellent properties of the cured product to be obtained, they are preferably used in an amount of 0.7 to 1.5 equivalents of active groups in the curing agent with respect to 1 equivalent of total epoxy groups in the epoxy resin.

As needed, a curing accelerator can also be combined with the thermosetting resin in the resin composition of the embodiment as appropriate. In a case where the curing resin is an epoxy resin, for example, various curing accelerators can be used, and examples thereof include phosphorus-based compounds, tertiary amines, imidazole, organic acid metal salts, Lewis acids, and amine complex salts.

As needed, a curing catalyst can also be combined with the thermosetting resin in a timely manner, and examples thereof include known and customary thermal polymerization initiators and active energy ray polymerization initiators.

### (Thermoplastic resin)

Examples of the thermoplastic resins which may be used for the resin composition of the embodiment, include known and customary resins used for molding materials and the like. Specific examples thereof include polyethylene resins, polypropylene resins, polymethyl methacrylate resins, polyvinyl acetate resins, ethylene-propylene copolymers, ethylene-vinyl acetate copolymers, polyvinyl chloride resins, polystyrene resins, polyacrylonitrile resins, polyamide resins, polycarbonate resins, polyacetal resins, polyethylene terephthalate resins, polyphenylene oxide resins, polyphenylene sulfide resins, polysulfone resins, polyethersulfone resins, polyetheretherketone resins, polyarylsulfone resins, thermoplastic polyimide resins, thermoplastic urethane resins, polyamino bismaleimide resins, polyamideimide resins, polyetherimide resins, bismaleimide triazine resins, polymethylpentene resins, fluorinated resins, liquid crystal polymers, olefin-vinyl alcohol copolymers, ionomer resins, polyarylate resins, acrylonitrile-ethylene-styrene copolymers, acrylonitrile-butadiene-styrene copolymers, and acrylonitrile-styrene copolymers. At least one type of thermoplastic resin can be selected for use, but a combination of two or more thermoplastic resins can also be used depending on the purpose.

When provided for applications of piezoelectric bodies, the resin preferably exhibits a high dielectric constant, and as the resin, polymers having electron-withdrawing groups are preferred, and fluorine-containing polymers such as polyvinylidene fluoride (PVDF), vinylidene fluoride-tetrafluoroethylene copolymer, and vinylidene fluoride-trifluoroethylene copolymer, and polymers having a cyano group or a cyanoethyl group such as cyanoethylated polyvinyl alcohol, vinylidene cyanide-vinyl acetate copolymer, cyanoethyl cellulose, cyanoethyl hydroxysaccharose, cyanoethyl hydroxy cellulose, cyanoethyl hydroxy pullulan, cyanoethyl methacrylate, cyanoethyl acrylate, cyanoethyl hydroxyethyl cellulose, cyanoethyl amylose, cyanoethyl hydroxypropyl cellulose, cyanoethyl dihydroxypropyl cellulose, cyanoethyl hydroxypropyl amylose, cyanoethyl polyacrylamide, cyanoethyl polyacrylate, cyanoethyl pullulan, cyanoethyl polyhydroxymethylene, cyanoethyl glycidol pullulan, cyanoethyl saccharose, and cyanoethyl sorbitol, are preferred.

The resin composition of the embodiment may contain other blends as needed, and in a range where the effects of the invention are obtained, external lubricants, internal lubricants, antioxidants, flame retardants, light stabilizers, ultraviolet absorbers, silane-based, titanate-based, and aluminate-based coupling agents, reinforcing materials such as glass fibers and carbon fibers, fillers, various colorants, and the like may also be added. Furthermore, low-stress agents (stress relievers) such as silicone oil, liquid rubbers, rubber powder, butadiene-based copolymer rubbers such as methyl acrylate-butadiene-styrene copolymers and methyl methacrylate-butadiene-styrene copolymers, and silicone-based compounds can also be used.

The resin composition of the embodiment is obtained by mixing the niobate particles of the embodiment, the resin, and, as needed, other blends. The mixing method is not particularly limited, and they are mixed together by any known and customary methods.

When the resin is a thermosetting resin, the general method is a method of sufficiently mixing the thermosetting resin, the niobate particles of the embodiment, and, as needed, other components by a mixer or the like, and then kneading the mixture using three rolls or the like, to obtain a liquid composition having liquidity, or a method of sufficiently mixing the thermosetting resin in a prescribed blended amount, the niobate particles of the embodiment, and, as needed, other components by a mixer or the like, then melt-kneading the mixture using a mixing roll, an extruder, or the like, and then cooling to obtain a solid composition. In the state of mixing, when the curing agents, the catalysts, and the like are blended, it is preferable that the curing resin and their blends are sufficiently and uniformly mixed, and it is more preferable that the niobate particles of the embodiment are also uniformly dispersed and mixed.

When the resin is a thermoplastic resin, examples of the general method include a method of pre-mixing the thermoplastic resin, the niobate particles of the embodiment, and other components as needed using various mixers such as a tumbler or a Henschel mixer, and then melt-kneading the mixture using a mixer such as a banbury mixer, a roll, a blender, a single screw kneader extruder, a twin screw kneader extruder, a kneader, or a mixing roll. Note that, the temperature of melt-kneading is not particularly limited, but examples thereof include a range of 240 to 320°C.

When preparing the resin composition of the embodiment, the mixing ratio of the niobate particles of the embodiment to the non-volatile content of the resin is not particularly limited, but may be, for example, in a range of 0.1 to 1,800 parts of the niobate particles and in a range of 10 to 900 parts of the niobate particles, based on 100 parts of the mass conversion the non-volatile content of the resin.

The ratio of the content of the niobate particles to the total volume (100 vol%) of the resin composition of the embodiment may be 10 vol% or more, 20 to 90 vol%, or 30 to 85 vol%.

### <<Molded body>>

The resin composition of the embodiment can be molded to obtain a molded body. As one embodiment, a molded body made by molding the resin composition of the embodiment is provided. To obtain a resin molded body, known and customary methods can be used.

For example, when the resin contained in the resin composition is a thermosetting resin, it is sufficient to be in accordance with the curing method for the thermosetting resin compositions such as the general epoxy resin compositions. For example, the resin composition in which the resin is an epoxy resin, and the like, can be cured by heat, and the heating temperature conditions when curing may be selected according to the type of the curing agents to be combined, the applications, and the like, as appropriate, and heating in the temperature range of room temperature to about 250°C is sufficient. In a case of active energy ray curable resins, they can be cured and molded by irradiating with active energy rays such as ultraviolet rays or infrared rays.

Furthermore, when the resin of the embodiment is a thermoplastic resin, it can also be made into a molded product by known and customary molding methods. Examples thereof include an injection molding method, an ultra highspeed injection molding method, an injection compression molding method, a two-color molding method, a hollow molding method such as gas-assist, a molding method using insulated molds, a molding method using a rapid heating mold, foam molding (including supercritical fluids), insert molding, an in-mold coating molding (IMC) method, an extrusion molding method, a sheet molding method, a rotational molding method, a laminate molding method, and a press molding method. The molding method using a hot runner system can also be used. There are no restrictions on the shape, pattern, color, dimensions, and the like of the molded product, and these can be optionally set according to the applications of the molded product.

When the molded body of the resin composition is in a sheet form or in a layer form, the thickness thereof may be 10 to 1,000 µm, or 10 to 500 µm.

The resin composition and the molded body thereof of the embodiment can be provided and used as a piezoelectric body by performing polarization treatment as appropriate.

### [Examples]

Next, Examples are provided to explain the present invention in more detail, but the present invention is not limited to the following Examples. That is, each configuration in each embodiment, combinations thereof, and the like, are merely example, and additions, omissions, substitutions, and other changes in the configuration are possible without departing from the spirit of the present invention. Furthermore, the present invention is not limited by each embodiment, but is limited only by the scope of the claims.

### <Analysis and Evaluation>

The following measurements were performed on samples of powders obtained in each of Examples and Comparative Examples.

### [X-Ray fluorescence (XRF) analysis]

Using an X-ray fluorescence analyzer Supermini 200 (manufactured by Rigaku Holdings Corporation), a sample measurement container was prepared by placing approximately 5 g of a sample powder in a PP container lined with Prolene film, and an X-ray fluorescence (XRF) analysis was performed under the following conditions.

### Measuring conditions

### EZ scan mode

Measured elements: F to U
Measurement time: standard
Measurement diameter: 30 mm
Residue (balance component): none

The content of niobium in the sample powder was determined by an XRF analysis of the sample powder and calculated as the content rate (% by mass) in terms of Nb₂O₅ to 100% by mass of the total mass of the sample powder.

The content of molybdenum in the sample powder was determined by an XRF analysis of the sample powder and calculated as the content rate (% by mass) in terms of MoO₃ to 100% by mass of the total mass of the sample powder.

The content of potassium in the sample powder was determined by an XRF analysis of the sample powder and calculated as the content rate (% by mass) in terms of K₂O to 100% by mass of the total mass of the sample powder.

The content of sodium in the sample powder was determined by an XRF analysis of the sample powder and calculated as the content rate (% by mass) in terms of Na₂O to 100% by mass of the total mass of the sample powder.

For x in KₓNa₍₁₋ₓ₎NbO₃, it was calculated from the content rate (% by mass) of K₂O and Na₂O obtained from the above XRF.

### [Crystal structure analysis: X-ray diffraction (XRD) method]

The sample powder was filled into a 0.5 mm-deep holder for measurement sample and the holder was set in an X-ray diffraction (XRD) apparatus (SmartLab, manufactured by Rigaku Holdings Corporation), and measurements were performed under conditions of Cu/Kα radiation, 40 kV/50 mA, a scan speed of 10°/min, and a scanning range of 10 to 90°.

### [Measurement of particle size]

### (For particles having cubic shape)

The sample powder was photographed by a scanning electron microscopy (SEM). For the particles of the smallest unit (that is, primary particles) found in the two-dimensional image, when they were found to have a cubic shape, the length of one side of the hexahedron determined from the particle image of the primary particle was measured as the particle size.

The similar operation was performed for 50 primary particles and each average value was obtained.

### [Measurement of crystallite size]

Measurements were performed using SmartLab (manufactured by Rigaku Holdings Corporation) as an X-ray diffraction apparatus and PDXL as the analysis software. The measurement method was the 2θ/θ method, and the average crystallite size was calculated using the Scherrer's equation from the full widths at half maximum of the peak appearing at 2θ = 23.0 ± 1.0°, the peak appearing at 2θ = 32.0 ± 1.2°, and the peak appearing at 2θ = 57.0 ± 1.0°. Note that, as the measurement conditions, the scan speed was 10°/min, the scan range was 10 to 90°, and the step was 0.02°

### [Measurement of particle size distribution]

A small amount of the particle powder was taken in a beaker, 50 mL of 0.5% sodium hexametaphosphate aqueous solution was added thereto, and a mixture was then dispersed for 2 minutes using an ultrasonic homogenizer Sonifier 450D (manufactured by BRANSON) to prepare a sample for measurement. The volume cumulative basis D₁₀, D₅₀, and D₉₀ of this sample for measurement were measured using a laser diffraction and scattering particle size distribution analyzer MT3300EX II (manufactured by MicrotracBEL Corp.).

### <Production of KₓNa₍₁₋ₓ₎NbO₃ particles>

### [Example 1]

40.0 g of niobium oxide (Nb₂O₅, manufactured by Mitsui Mining and Smelting Company, Limited), 22.6 g of potassium carbonate (K₂CO₃, manufactured by AGC Inc.), 9.7 g of sodium carbonate (Na₂CO₃, manufactured by Tokuyama Corporation), and 13.6 g of molybdenum trioxide (MoO₃, manufactured by NIPPON INORGANIC COLOUR & CHEMICAL CO., LTD.) were mixed in the Absolute Mill (manufactured by Osaka Chemical Co., Ltd.) for 30 seconds to obtain a mixture. The resulting mixture was placed in a crucible and fired at 850°C for 5 hours in a ceramic electric furnace.

Subsequently, the resulting fired product was placed in 250 mL of pure water and after repeating ultrasonic washing four times, the remaining flux agent was removed by water washing of removing the washing water by filtration and drying, to obtain a powder of Example 1.

### [Example 2]

A powder was obtained in the similar manner as in Example 1, except that the amounts of potassium carbonate, sodium carbonate, and molybdenum trioxide were changed to 18.4 g, 9.2 g, and 9.1 g, respectively.

### [Example 3]

A powder was obtained in the similar manner as in Example 1, except that the amounts of potassium carbonate, sodium carbonate, and molybdenum trioxide were changed to 16.3 g, 9.0 g, and 6.8 g, respectively.

### [Example 4]

A powder was obtained in the similar manner as in Example 1, except that the amounts of potassium carbonate and sodium carbonate were changed to 21.8 g and 10.2 g, respectively.

### [Example 5]

40.0 g of niobium oxide (Nb₂O₅, manufactured by Mitsui Mining and Smelting Company, Limited), 12.1 g of potassium carbonate (K₂CO₃, manufactured by AGC Inc.), 8.6 g of sodium carbonate (Na₂CO₃, manufactured by Tokuyama Corporation), 19.8 g of potassium molybdate (K2MoO4, manufactured by FUJIFILM Wako Pure Chemicals Corporation), 2.7 g of sodium molybdate (Na2MoO4, manufactured by FUJIFILM Wako Pure Chemicals Corporation) were mixed in the Absolute Mill (manufactured by Osaka Chemical Co., Ltd.) for 30 seconds to obtain a mixture. The resulting mixture was placed in a crucible and fired at 850°C for 5 hours in a ceramic electric furnace.

Subsequently, the resulting fired product was placed in 250 mL of pure water and after repeating ultrasonic washing four times, the remaining flux agent was removed by water washing of removing the washing water by filtration and drying, to obtain a powder of Example 5.

### [Example 6]

A powder was obtained in the similar manner as in Example 1, except that the amounts of potassium carbonate, sodium carbonate, and molybdenum trioxide were changed to 28.8 g, 10.3 g, and 20.4 g, respectively.

### [Example 7]

A powder was obtained in the similar manner as in Example 1, except for firing at 950°C for 5 hours.

### [Example 8]

A powder was obtained in the similar manner as in Example 1, except for firing at 750°C for 5 hours.

### [Example 9]

A powder was obtained in the similar manner as in Example 1, except that the amounts of potassium carbonate and sodium carbonate were changed to 16.7 g and 14.1 g, respectively.

### [Example 10]

A powder was obtained in the similar manner as in Example 1, except that the amounts of potassium carbonate and sodium carbonate were changed to 29.2 g and 4.5 g, respectively.

### [Example 11]

A powder was obtained in the similar manner as in Example 1, except that the amounts of potassium carbonate, sodium carbonate, and molybdenum trioxide were changed to 30.1 g, 10.5 g, and 21.8 g, respectively.

### [Comparative Example 1]

80.0 g of niobium oxide (Nb₂O₅, manufactured by Mitsui Mining and Smelting Company, Limited), 20.0 g of potassium carbonate (K₂CO₃, manufactured by AGC Inc.), and 16.9 g of sodium carbonate (manufactured by Tokuyama Corporation) were mixed for 30 seconds in the Absolute Mill (manufactured by Osaka Chemical Co., Ltd.) to obtain a mixture. The resulting mixture was placed in a crucible and fired at 850°C for 5 hours in a ceramic electric furnace to obtain a powder of Comparative Example 1.

Table 1 lists the above synthesis conditions.

**[Table 1]**

| | Nb₂o₅ | K₂CO₃ | Na₂CO₃ | MoO₃ | K₂MoO₄ | Na₂MoO₄ | Nb₁/(Na₁ + K₁ + Mo₁) | (Na+K)/(2 × Mo + Nb) | Firing conditions |
|---|---|---|---|---|---|---|---|---|---|
| | g | g | g | g | g | g | | | °C |
| Ex. 1 | 40.0 | 22.6 | 9.70 | 13.6 | - | - | 0.87 | 1.04 | 850 |
| Ex. 2 | 40.0 | 18.4 | 9.20 | 9.10 | - | - | 1.09 | 1.03 | 850 |
| Ex. 3 | 40.0 | 16.3 | 9.00 | 6.80 | - | - | 1.25 | 1.02 | 850 |
| Ex. 4 | 40.0 | 21.8 | 10.2 | 13.6 | - | - | 0.88 | 1.04 | 850 |
| Ex. 5 | 40.0 | 12.1 | 8.60 | - | 19.8 | 2.70 | 0.93 | 1.07 | 850 |
| Ex. 6 | 40.0 | 28.8 | 10.3 | 20.4 | - | - | 0.67 | 1.05 | 850 |
| Ex. 7 | 40.0 | 22.6 | 9.70 | 13.6 | - | - | 0.87 | 1.04 | 950 |
| Ex. 8 | 40.0 | 22.6 | 9.70 | 13.6 | - | - | 0.87 | 1.04 | 750 |
| Ex. 9 | 40.0 | 16.7 | 14.1 | 13.6 | - | - | 0.90 | 1.04 | 850 |
| Ex. 10 | 40.0 | 29.2 | 4.50 | 13.6 | - | - | 0.85 | 1.04 | 850 |
| Ex. 11 | 40.0 | 30.1 | 10.5 | 21.8 | - | - | 0.64 | 1.05 | 850 |
| Comp. Ex. 1 | 80.0 | 20.0 | 16.9 | - | - | - | - | - | 850 |

Table 2 lists the evaluation results for each of the particles obtained from the table of formulations in Table 1. Evaluations were made on the basis of "○", "Δ", and "×" for the takeout properties from the crucible. "○" indicates that the fired product can be easily taken out without sticking to the crucible, "Δ" indicates that a part of the fired product sticks to the crucible, and "×" indicates that the fired product sticks to the crucible and cannot be taken out. In the table, "N.D." is an abbreviation for "not detected", indicating that it was not detected.

**[Table 2]**

| | Takeou t proper ties from crucib le | Firi ng yiel d | XRF | | | | | SEM | | Crystallite size | | | Particle size | | |
|---|---|---|---|---|---|---|---|---|---|---|---|---|---|---|---|
| | | | Na₂ O | K₂O | Nb₂ O₅ | MoO₃ | x | Shape | Si ze | 22 to 24 ° | 30. 8 to 33. 2° | 56 to 58 ° | D1 0 | D5 0 | D9 0 |
| | | wt% | % by ma ss | % by ma ss | % by ma ss | % by mass | | | | nm | nm | nm | µm | µm | µm |
| Ex. 1 | ○ | 0.60 | 6. 66 | 10 .2 | 83 .1 | N.D. | 0. 50 | Cubic | 10 | 13 1 | 130 | 86 .7 | 6. 4 | 9. 8 | 15 .5 |
| Ex. 2 | ○ | 0.67 | 6. 33 | 10 .5 | 83 .2 | N.D. | 0. 52 | Cubic | 9 | 13 3 | 128 | 96 .2 | 5. 8 | 9. 1 | 14 .7 |
| Ex. 3 | ○ | 0.72 | 6. 38 | 10 .6 | 83 .0 | N.D. | 0. 52 | Cubic | 8 | 14 2 | 132 | 95 .8 | 5. 6 | 8. 7 | 13 .9 |
| Ex. 4 | ○ | 0.60 | 6. 23 | 9. 43 | 84 .3 | 0.05 63 | 0. 50 | Cubic | 8 | 13 6 | 126 | 85 .8 | 5. 2 | 8. 2 | 13 .6 |
| Ex. 5 | ○ | 0.62 | 5. 53 | 10 .7 | 83 .7 | N.D. | 0. 56 | Cubic | 7 | 13 7 | 129 | 86 .3 | 4. 7 | 6. 9 | 10 .6 |
| Ex. 6 | Δ | 0.52 | 6. 07 | 9. 82 | 84 .1 | N.D. | 0. 52 | Cubic | 10 | 13 3 | 125 | 96 .8 | 6. 2 | 9. 4 | 14 .8 |
| Ex. 7 | ○ | 0.60 | 6. 17 | 9. 75 | 84 .1 | N.D. | 0. 51 | Cubic | 16 | 13 2 | 137 | 11 5 | 8. 3 | 15 .1 | 26 .5 |
| Ex. 8 | ○ | 0.60 | 6. 52 | 11 .1 | 82 .4 | N.D. | 0. 53 | Cubic | 6 | 13 6 | 129 | 84 .9 | 3. 5 | 5. 3 | 8. 0 |
| Ex. 9 | ○ | 0.61 | 7. 79 | 5. 71 | 86 .5 | N.D. | 0. 33 | Cubic | 10 | 15 7 | 128 | 74 .3 | 6. 2 | 9. 9 | 16 .4 |
| Ex. 10 | ○ | 0.59 | 3. 22 | 14 .3 | 82 .4 | N.D. | 0. 75 | Cubic | 9 | 16 7 | 167 | 14 5 | 7. 1 | 10 .4 | 16 .1 |
| Ex. 11 | Δ | 0.51 | 6. 32 | 9. 54 | 84 .1 | N.D. | 0. 50 | Cubic | 9 | 16 7 | 137 | 12 0 | 6. 2 | 9. 4 | 15 .1 |
| Com p. Ex. 1 | ○ | - | 5. 5 | 12 | 82 .5 | N.D. | 0. 59 | Amorph ous (parti ally cubic) | < 1 | 63 .7 | 39. 3 | 51 .6 | 0. 5 | 2. 5 | 21 .3 |

Table 2 lists the shape and size of the particles in each example and comparative example, determined from the SEM images. In cases where the particles having different shapes were found to be mixed, the representative shape (most frequently observed shape) was noted. Aggregates of the particles having a cubic shape are also included in the description of particles having a cubic shape. If no specific shape was observed, it was judged to be amorphous.

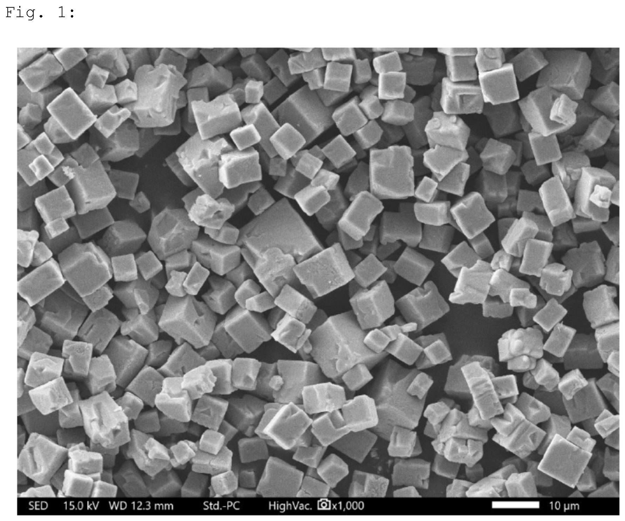

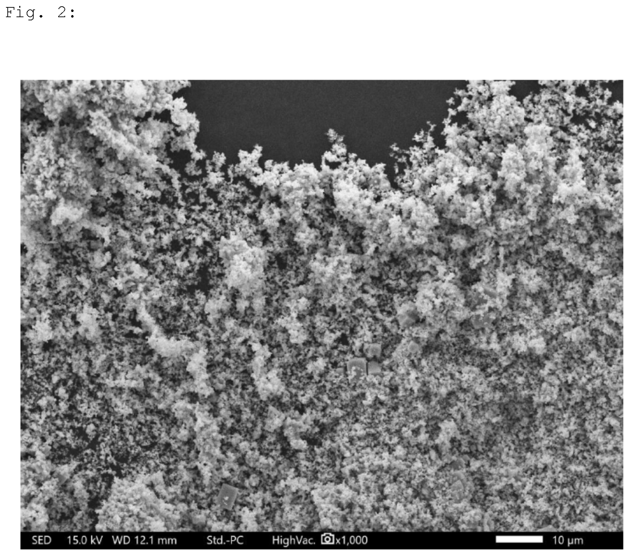

In Example 1, as illustrated in FIG. 1, the shape of the particles was a cubic shape. In each of Examples 2 to 11, as in Example 1, the shape of the particles was also a cubic shape. In Comparative Example 1, as illustrated in FIG. 2, the shape of the particles was an amorphous shape, and the particles having partially a cubic shape were observed.

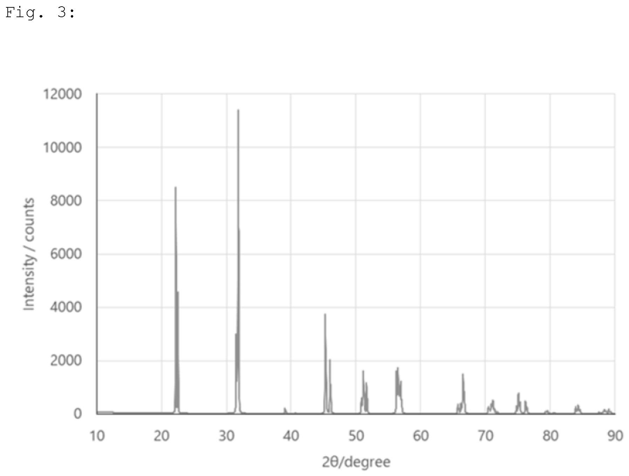

From the results of the XRD analysis, in the sample of Example 1, the peaks at 2θ = 23.0 ± 1.0°, 2θ = 32.0 ± 1.2°, and 2θ = 57.0 ± 1.0° which were attributable to the (100) plane, the (110) plane, and the (221) plane of a perovskite structure of KₓNa₍₁₋ₓ₎NbO₃, respectively, as illustrated in FIG. 3, were observed. Similarly, in each of the samples in Examples 2 to 11 and Comparative Example 1, each of the peaks which were attributable to the (100) plane, the (110) plane, and the (221) plane of a perovskite structure of KₓNa₍₁₋ₓ₎NbO₃, was observed.

Also, it was shown that the powder samples obtained from each of Examples 1 to 11 and Comparative Example 1 contained niobium, molybdenum, potassium, and sodium in an amount in terms of the oxide listed in Table 2, determined by an XRF analysis.

Focusing on each particle size (SEM observation, D₅₀) and crystallite size, the particles in Examples 1 to 11 had larger primary particle size and crystallite size than those in Comparative Example. This is considered to be a result of the fact that most of MoO₃, Na₂CO₃, K₂CO₃, Na₂MoO₄, and K₂MoO₄ that are the raw material compounds used in the production methods in each of Examples, (including their products and decomposition products) functioned as a fluxing agent, allowing the crystal growth of the particles to be able to proceed successfully.

Furthermore, higher firing temperatures tended to obtain larger sized particles (Examples 1, 7, and 8).

The results of Examples 1 to 11 showed that by firing the niobium compound in the presence of the molybdenum compound, the potassium compound and/or the sodium compound, high-quality KₓNa₍₁₋ₓ₎NbO₃ particles having a large average crystallite size value and a perovskite structure could be fired.

### <Production of piezoelectric composite sheet>

### [Example 12]

26.1 g of the particles produced in Example 1, 3.54 g of a silicone resin KE-106 (Shin-Etsu Chemical Co., Ltd.), and 0.35 g of CAT-RG (Shin-Etsu Chemical Co., Ltd.) were weighed and taken into a container, and a mixture was stirred at 2,000 rpm for 120 seconds using a rotation and revolution mixer ARV-200 (manufactured by Thinky Corporation). After stirring, the mixture was poured into a mold having 5.5 cm square and 0.3 mm deep and pressed at 120°C and 1 MPa for 30 minutes. In this way, a piezoelectric composite sheet having a volume fraction of the particles of 60 vol% was obtained.

### [Example 13]

A piezoelectric composite sheet having a volume fraction of the particles of 64 vol% was obtained in the similar manner as in Example 12, except for changing to 26.6 g of the particles produced in Example 1, 3.05 g of a silicone resin KE-106 (manufactured by Shin-Etsu Chemical Co., Ltd.), and 0.31 g of CAT-RG (manufactured by Shin-Etsu Chemical Co., Ltd.).

### [Comparative Example 2]

A piezoelectric composite sheet having a volume fraction of the particles of 60 vol% was obtained in the similar manner as in Example 12, except that the particles were changed to the particles produced in Comparative Example 1.

### [Example 14]

The particles produced in Example 1 and PVDF (Kureha Corporation, model #850) were weighed so that a volume fraction of the particles was 40 vol%, and kneaded using the Labo Plasotmill mixer (manufactured by Toyo Seiki Seisakusho, Ltd., model: 4C150) under conditions of temperature of 220°C, screw rotation speed of 60 ppm, and kneading time for 3 minutes to obtain a resin composition kneaded body. The kneaded resin composition kneaded body was then subjected to a compression molding machine at a temperature of 230°C, with a preheating time for 1 minute, a compression time for 1 minute, and a pressure of 100 kgf/cm² to obtain a sheet having a thickness of 0.5 mm. The sheet was further compressed three times at a temperature of 240°C, with a preheating time for 30 seconds, a compression time for 30 seconds, and a pressure of 100 kgf/cm² to obtain a piezoelectric composite sheet.

### [Example 15]

A piezoelectric composite sheet was obtained in the similar manner as in Example 14, except that the volume fraction of the particles was changed to 60 vol%.

### [Comparative Example 3]

A piezoelectric composite sheet was obtained in the similar manner as in Example 14, except that the particles were changed to the particles produced in Comparative Example 1.

### [Evaluation of piezoelectric composite sheet]

A 100 nm aluminum electrode was formed on one side of the piezoelectric composite sheet using a vapor deposition apparatus, and the aluminum electrode was dropped to ground. After heating the sheet to 120°C on a hot plate, a direct current voltage of -10 kV was applied to a discharge needle placed directly above the sheet, and a corona discharge treatment was performed for 3 minutes. After removing the sheet from the hot plate, a 100 nm aluminum electrode was formed on the surface subjected to a corona discharge treatment using a vapor deposition apparatus to obtain a polarization-treated aluminum electrode/piezoelectric composite sheet/aluminum electrode laminate.

The resulting laminate was cut into 10 mm × 2 mm pieces using an NT cutter. Subsequently, the complex permittivity was measured on the resulting 10 mm × 2 mm laminate sheet using the Impedance Analyzer 4294A manufactured by Agilent Technologies, and the electromechanical coupling constant kt in a thickness direction was calculated.

The practical range of electromechanical coupling constant kt varies depending on the resin used, but in the case of using a silicone resin, when the electromechanical coupling constant kt is 0.03 or higher, the piezoelectric composite sheet can be used without any practical problems, and the electromechanical coupling constant kt is more preferably 0.04 or higher, and particularly preferably 0.08 or higher. On the other hand, in the case of using polyvinylidene fluoride (PVDF) resin, when the electromechanical coupling constant kt is 0.05 or higher, the piezoelectric composite sheet can be used without any practical problems, and the electromechanical coupling constant kt is more preferably 0.09 or higher, and particularly preferably 0.15 or higher.

Table 3 lists the thickness electromechanical coupling constants kt of the piezoelectric composite sheet.

**[Table 3]**

| | Particles | Crystallite size (22 to 24°) | Resin | Content of particles | Thickness | kt |
|---|---|---|---|---|---|---|
| | | nm | | Vol% | µm | |
| Ex. 13 | Ex. 1 | 115 | Silicone | 60 | 290 | 0.040 |
| Ex. 14 | Ex. 1 | 115 | Silicone | 64 | 320 | 0.080 |
| Ex. 15 | Ex. 1 | 115 | PVDF | 40 | 220 | 0.093 |
| Ex. 16 | Ex. 1 | 115 | PVDF | 60 | 98 | 0.190 |
| Comp. Ex. 2 | Comp. Ex. 1 | 63.7 | Silicone | 60 | 290 | 0.020 |
| Comp. Ex. 3 | Comp. Ex. 1 | 63.7 | PVDF | 40 | 220 | 0.048 |

It became clear that the piezoelectric composite sheet containing the particles of Example 1 exhibited a higher electromechanical coupling constant kt, compared to the piezoelectric composite sheet containing the particles of Comparative Example 1, indicating an excellent piezoelectric effect. It is considered that the excellent piezoelectric performance was achieved because the crystallite size of the KₓNa₍₁₋ₓ₎NbO₃ particles contained in the powder of Example 1 was larger than that of the KₓNa₍₁₋ₓ₎NbO₃ particles contained in the powder of Comparative Example 1.

## Claims

1. Niobate particles comprising a crystal structure of niobate represented by KₓNa₍₁₋ₓ₎NbO₃ (wherein 0 ≤ x ≤ 1), wherein
the crystal structure has an average crystallite size of 80 nm or more, determined from a peak at 2θ = 23.0 ± 1.0°, of the niobate obtained from an X-ray diffraction measurement.

2. The niobate particles according to claim 1, wherein the crystal structure includes a perovskite crystal structure.

3. The niobate particles according to claim 1 or 2, having a cubic shape.

4. The niobate particles according to claim 1 or 2, wherein the crystal structure has an average crystallite size of 50 nm or more, determined from a peak at 2θ = 32.0 ± 1.2°, of the niobate obtained from an X-ray diffraction measurement.

5. The niobate particles according to claim 1 or 2, wherein a median diameter D₅₀ calculated by a laser diffraction and scattering method is 0.1 to 100 µm.

6. The niobate particles according to claim 1 or 2, wherein, as a total content of niobium in the niobate particles, a content rate is 50 to 99% by mass in terms of Nb₂O₅ to 100% by mass of a total mass of the niobate particles, determined by an XRF analysis of the niobate particles.

7. The niobate particles according to claim 1 or 2, wherein, as a content of potassium and/or sodium in the niobate particles, a content rate is 0.5 to 40% by mass in terms of K₂O and Na₂O to 100% by mass of a total mass of the niobate particles, determined by an XRF analysis of the niobate particles.

8. The niobate particles according to claim 1, comprising molybdenum.

9. The niobate particles according to claim 8, wherein, as a content of molybdenum in the niobate particles, a content rate is 0.01 to 20% by mass in terms of MoO₃ to 100% by mass of a total mass of the niobate particles, determined by an XRF analysis of the niobate particles.

10. A method for producing the niobate particles according to claim 1, the method comprising firing a niobium compound in the presence of a molybdenum compound, a potassium compound and/or a sodium compound.

11. The method for producing the molybdate particles according to claim 10, wherein the molybdenum compound is at least one compound selected from the group consisting of molybdenum trioxide, potassium molybdate, and sodium molybdate.

12. The method for producing the niobate particles according to claim 10 or 11, the method comprising:
a step of mixing a niobium compound, a molybdenum compound, a potassium compound and/or a sodium compound to form a mixture; and
a step of firing the mixture, wherein
a ratio (Nb₁)/(Na₁ + K₁ + Mo₁) of a total mass of the sodium compound (Na₁), the potassium compound (K₁), and the molybdenum compound (Mo₁), which are flux components, to a mass of the niobium compound (Nb₁) in the mixture is 0.6 or more.

13. The method for producing the niobate particles according to claim 10 or 11, the method comprising:
a step of mixing a niobium compound, a molybdenum compound, a potassium compound and/or a sodium compound to form a mixture; and
a step of firing the mixture, wherein
a molar ratio of potassium atoms and sodium atoms to molybdenum atoms and niobium atoms in the mixture satisfies (K + Na)/(2 × Mo + Nb) > 1.

14. A resin composition, comprising the niobate particles according to claim 1 or 2 and a resin.

15. A molded body made by molding the resin composition according to claim 14.
